Europäisches Patentamt

European Patent Office

Office européen des brevets

(19)

(11) EP 0 737 616 B1

(12) EUROPÄISCHE PATENTSCHRIFT

(45) Veröffentlichungstag und Bekanntmachung des Hinweises auf die Patenterteilung:
25.02.1998 Patentblatt 1998/09

(51) Int. Cl.$^6$: **B64C 1/00**, B64C 1/26

(21) Anmeldenummer: 95105715.7

(22) Anmeldetag: 15.04.1995

(54) **Rumpfheck für ein Verkehrsflugzeug**

Tail cone of a commercial aircraft

Partie arrière du fuselage d'un avion commerciale

(84) Benannte Vertragsstaaten:
FR GB

(43) Veröffentlichungstag der Anmeldung:
16.10.1996 Patentblatt 1996/42

(73) Patentinhaber:
Daimler-Benz Aerospace Airbus Gesellschaft mit beschränkter Haftung
21129 Hamburg (DE)

(72) Erfinder:
• Buttkereit, Volker, Dipl.-Ing.
D-20251 Hamburg (DE)
• Hempel, Joachim, Dipl.-Ing.
D-22559 Hamburg (DE)
• Kiekebusch, Burkhard, Dipl.-Ing.
D-21698 Harsefeld (DE)
• Schöne, Wolfram, Dipl.-Ing.
D-21614 Buxtehude (DE)

(74) Vertreter:
Hansmann, Dierk, Dipl.-Ing.
Patentanwälte
Hansmann-Kıickow-Hansmann
Jessenstrasse 4
22767 Hamburg (DE)

(56) Entgegenhaltungen:
FR-A- 953 618          US-A- 2 874 922
US-A- 4 976 396

**Beschreibung**

Die Erfindung bezieht sich auf ein Rumpfheck für ein Verkehrsflugzeug mit einer Druckkabine, wobei das Rumpfheck eine obere Konturlinie und eine untere Konturlinie aufweist, wodurch der Umriß des Hecks bei horizontaler Betrachtung definiert wird, und zwei seitliche Konturlinien aufweist, wodurch der Umriß des Hecks bei vertikaler Betrachtung definiert wird, wobei das Rumpfheck ferner zwei Spante aufweist, die ein Seitenleitwerk tragen, und ein Höhenleitwerk mit einer Flosse an das Rumpfheck angeschlossen ist und die Flosse über deren Mittelkasten trimmbar ausgebildet ist.

Die Außenform eines Flugzeuges wird überwiegend aufgrund aerodynamischer Überlegungen festgelegt. Dies hat zur Folge, daß die Gestaltungsmöglichkeiten der tragenden Struktur sowie der Anordnung der einzelnen Ausrüstungskomponenten des Flugzeuges durch dessen äußere Form beschränkt sind. Bei Verkehrsflugzeugen mit direkt am Heck angeschlossenen Leitwerken stellt die Heckpartie einen besonders problematischen Bereich dar: Einerseits ist zur Realisierung eines wirksamen Leitwerks eine bestimmte äußere Leitwerks- und Heckform erforderlich, andererseits sind auf engem Raum alle Elemente zur Übertragung der betreffenden Kräfte und zur Sicherstellung der betreffenden Systemfunktionen auch des Höhenleitwerks unterzubringen. Bekannte Lösungen von Flugzeughecks stellen daher immer Kompromisse zwischen dem aerodynamisch Geforderten und dem struktur- bzw. systembezogen Machbaren dar. Ein weiterer Gesichtspunkt, der bei der Gestaltung eines Flugzeughecks eine Rolle spielt ist der, daß das Heck an sich ein Teil des Rumpfes ist, der zur Aufnahme von Passagiersitzen bzw. Frachtstücken nicht optimal nutzbar ist, und daher so kurz wie möglich sein sollte, um Gewicht zu sparen.

Bei entsprechenden Flugzeugen durchdringt der Mittelkasten des Höhenleitwerks das Rumpfheck aus konstruktiven Gründen hinter dem Bereich der Rumpfspanten, woran das Seitenleitwerk angeschlossen ist, so daß eine Entkopplung der Leitwerksstrukturen erreicht wird. Eine entsprechende Lösung ist der Flight, 2.Jan.1982, S.16,17 zu entnehmen. Hierbei nimmt das Seitenleitwerk des Flugzeuges eine Position ein, die nicht die größtmögliche Länge seines Hebelarms um den Schwerpunkt des Flugzeuges ergibt, die aber im Hinblick auf das trimmbare Höhenleitwerk Vorteile bietet. Um dennoch eine hinreichende Wirksamkeit des Seitenleitwerks sicherzustellen, ist dieses stark nach hinten gezogen, d.h. stärker gepfeilt und weist außerdem eine relativ große Fläche auf. Das derart vergrößerte Seitenleitwerk erfordert eine relativ große Profildicke, um die betreffenden Biegekräfte statisch zu beherrschen. Hierbei wird also die erforderliche Wirksamkeit des Seitenleitwerks durch Maßnahmen erkauft, die sich ungünstig auf das Gewicht und den Reibungswiderstand des Seitenleitwerks auswirken. Der Übergang vom Rumpf zum Seitenleitwerk wird durch eine scharfkantige Hohlkehle gebildet. Diese unstetige Form des Übergangs ist aus aerodynamischer Sicht keineswegs optimal. Weiterhin ist bei dieser für den derzeitigen Stand der Technik exemplarischen Lösung von Nachteil, daß das Heck infolge seiner relativ schlanken Form einen relativ großen Teil der Gesamtrumpflänge beansprucht. Diese aus aerodynamischen Gründen gewählte Form steht einer Vergrößerung der Passagierkabine bei einer gegebenen Rumpflänge, und damit einer Verkürzung des Hecks, entgegen.

Die Flug-Revue, vom Dez. 1970, S 28,29 zeigt ein weiteres Rumpfheck. Das hier dargestellte Flugzeug weist wieder ein Rumpfheck auf, woran das Höhenleitwerk und das Seitenleitwerk angeschlossen sind, wobei auch hier die Flosse des Höhenleitwerks trimmbar ausgebildet ist. Zwischen der Wurzel des Seitenleitwerks und dem Rumpfheck ist hier jedoch ein Strahltriebwerk angeordnet, so daß zwischen der Leitwerkswurzel und dem Heck ein dem Außendurchmesser der Triebwerksgondel entsprechender Abstand besteht. Das Seitenleitwerk erscheint daher um den Außendurchmesser des Triebwerks nach oben verlagert. Die Übertragung der Seitenleitwerkskräfte geschieht dadurch, daß dessen Holme an innerhalb der Triebwerksverkleidung angeordneten Spanten angeschlossen sind, die ihrerseits mit entsprechenden Spanten des Rumpfhecks verbunden sind. Bei dieser Lösung ist der Mittelkasten des Höhenleitwerks nicht hinter sondern zwischen den heckseitigen Spanten hindurch geführt, woran das Seitenleitwerk letztlich angeschlossen ist. Obwohl diese Maßnahme an sich einen Vorteil bezüglich des Seitenleitwerks-Hebelarms ergeben würde, wird dieser durch die Verlagerung des Seitenleitwerks nach oben wieder aufgehoben. Damit ist auch diese Lösung bezüglich Gewicht und Widerstand des Seitenleitwerks nicht optimal.

Andere bekannte Flugzeuge der in Betracht kommenden Art weisen im Bereich des Rumpf/Seitenleitwerks-Überganges Befestigungsbeschläge auf. Diese Beschläge sind zur Erzielung optimaler statischer Verhältnisse so angeordnet, daß sie die theoretische Außenkontur im Bereich des Überganges überragen, so daß entsprechende Verkleidungen notwendig werden. Die damit verbundenen Aufdickungen im Bereich der Beschläge ergeben eine entsprechende Zunahme des Luftwiderstandes. Derartige Verkleidungen dienen bisher nur dazu, die äußere Formgebung der entsprechenden Bereiche eines Flugzeuges den aerodynamischen Erfordernissen anzupassen und tragen daher nicht zur Festigkeit der betreffenden Strukturen bei.

Die aus aerodynamischen Gründen immer vorhandene Verjüngung des Rumpfquerschnitts zur Heckspitze hin bewirkt eine Divergenz der Stromlinien im Heckbereich, die ihrerseits eine erhöhte Neigung der Strömung zur Ablösung mit sich bringt. Infolge der mehr oder weniger nach oben gezogenen Heckformen, auch "upsweep" genannt, treten diese Ablösungserscheinungen bevorzugt an der jeweiligen Heckunterseite auf. Die DE 35 26 472 C2 zeigt eine Rumpfheckmodifikation von Flugzeugen mit hochgezogener Heckquerschnittsform, die von der Kreisform abweicht. Hierbei wird vorgeschlagen, daß der Flächenschwerpunkt der an sich kreisrunden Spantquerschnitte nach unten verlegt wird, so daß auf der Unterseite des Querschnittes Auswölbungen entstehen, jedoch die untere und die obere und die Seitengrenzkonturen unverändert im Querschnitt verbleiben. Durch diese Maßnahme wird der Ablösungspunkt der Strömung auf der Heckunterseite von seiner bisherigen Position in eine weiter stromab gelegene Position verlagert, wodurch eine Reduktion des Druckwiderstandes erreicht wird. Hinweise zur Verkürzung des Hecks gegenüber der Gesamtrumpflänge oder auf eine vorteilhafte Anordnung des Höhenleitwerks am Heck sind dieser Druckschrift nicht zu entnehmen.

Demgemäß liegt der Erfindung die Aufgabe zugrunde, ein gattungsgemäßes Rumpfheck derart auszubilden, daß dieses gegenüber bisherigen Lösungen eine kürzere Baulänge sowie ein kleineres und leichteres Seitenleitwerk aufweist.

Diese Aufgabe wird bei einem gattungsgemäßen Rumpfheck dadurch gelöst, daß mindestens die obere Konturlinie und die beiden seitlichen Konturlinien jeweils einen Wendepunkt aufweisen und der Mittelkasten des Höhenleitwerks das Rumpfheck zwischen den Spanten durchdringt, die das Seitenleitwerk tragen.

Dabei ist insbesondere von Vorteil, daß sich außer einer besseren Raumausnutzung des Flugzeugrumpfes auch eine Senkung sowohl des Heckwiderstandes als auch des Heck-Gewichtes ergibt.

Vorteilhafte Weiterbildungen der Erfindung sind in den Unteransprüchen angegeben.

Die Erfindung ist anhand der Zeichnung dargestellt und nachfolgend näher erläutert. Es zeigen

Fig. 1     ein Rumpfheck nach Stand der Technik,

Fig. 2     ein Rumpfheck gemäß der Erfindung,

Fig. 3     ein Rumpfheck mit einer Rohraussteifung,

Fig. 4     eine Seitenansicht eines neuen Hecks,

Fig. 5     die Draufsicht des Hecks nach Fig.4,

Fig. 6     ein Diagramm der Querschnitts- und Umfangsverteilung im Heckbereich,

Fig. 7     einen Spantenriß eines bisherigen Hecks,

Fig. 8     einen Spantenriß eines neuen Hecks,

Fig. 9     einen Vergleich zweier Rumpf- Seitenleitwerks-Übergänge. und

Fig. 10     die Einzelheit X nach Fig. 9.

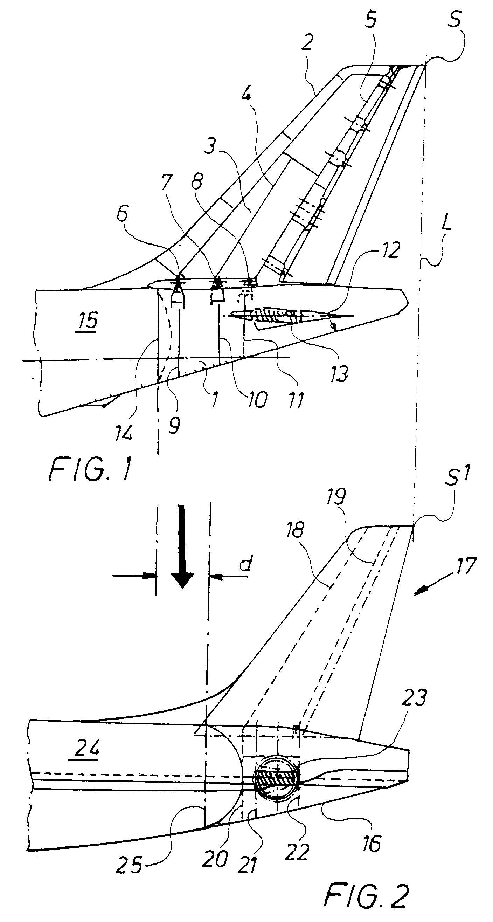

Figur 1 zeigt ein Rumpfheck 1 eines hier nicht weiter gezeigten Flugzeuges F. Auf das Heck 1 ist ein Seitenleitwerk 2 aufgesetzt, dessen Holme 3,4,5 über Anschlußbeschläge 6,7,8 an heckseitige Spante 9,10,11 angeschlossen sind. Anhand des Umrisses 12 ist die Position des Höhenleitwerks mit dem Mittelkasten 13 angedeutet. Die Stelle des Rumpfhecks 1, an der dieses vom Mittelkasten 13 durchdrungen wird, liegt hinter dem letzten der Spante 9,10 und 11. Angaben wie "hinter" bzw. "vor" bedeuten in diesem Zusammenhang immer näher zum Rumpfende hin bzw. näher zur Rumpfnase hin gelegen. Vor dem Spant 9 befindet sich der sog. Druckspant 14, der die Druckkabine 15 nach hinten abschließt.

Figur 2 zeigt demgegenüber eine Ausgestaltung der Erfindung im Form eines Rumpfhecks 16 mit einem Seitenleitwerk 17, das mit seinen Holmen 18 und 19 an die rumpfseitigen Spante 20 und 22 angeschlossen ist. Dabei ist zwischen diesen beiden Spanten ein Hilfsspant 21 angeordnet. Der Mittelkasten 23 des Höhenleitwerks durchdringt das Rumpfheck 16 zwischen den Spanten 20 bis 22, die das Seitenleitwerk tragen. Die hier mit 24 bezeichnete Druckkabine wird nach hinten durch den Druckspant 25 abgeschlossen. Das hier gezeigte neue Heck 16 ersetzt das oben gezeigte Heck 1, wobei die übrigen technischen Gegebenheiten des nicht dargestellten Flugzeuges F erhalten bleiben. Durch die Linie L, die die oberen Eckpunkte S und S' der Seitenleitwerke 2 und 17 miteinander verbindet, wird angedeutet, daß die x-Koordinaten beider Punkte von den entsprechenden Koordinaten der betreffenden Rumpfnase die gleiche Entfernung haben. Der Anschlußbereich des Seitenleitwerks an das Heck ist bei der neuen Heckausbildung gegenüber der Ausgestaltung gemäß Fig. 1 deutlich nach hinten verlagert. Hierdurch werden bezüglich der äußeren und inneren Geometrie des Hecks folgende Möglichkeiten eröffnet.

- Der Druckspant 25 kann nach hinten, also zur Heckspitze hin verlagert werden, was bei hinreichendem Rumpfquerschnitt den Einbau zusätzlicher Sitzreihen in die Kabine 24 ermöglicht.

- Das Seitenleitwerk 17 kann mit kleinerer Pfeilung und kleinerer Fläche ausgebildet werden, was sowohl ein niedrigeres Strukturgewicht als auch einen niedrigeren Reibungswiderstand zur Folge hat.

- Die Querschnittsform des Hecks kann aufgrund aerodynamischer Gesichtspunkte neu gestaltet werden.

Das Ausmaß einer möglichen Verlagerung des Druckspants 25, und damit auch der unmittelbaren Auswirkung auf die Geometrie der Kabine 24, wird durch die Strecke d deutlich. Der Mittelkasten 23 ist zur Sicherstellung der Trimmfunktion innerhalb der Heckstruktur um eine Querachse schwenkbar gelagert. Dabei erfolgt die Einleitung der Kräfte des Höhenleitwerks in das Heck 16 über die Spante 21 und 22. Eine übliche Schwenkverbindung zwischen dem Heck 16 und dem Mittelkasten 23 besteht beispielsweise darin, daß dieser über ein Gelenk mit entsprechend ausgerichteter Schwenkachse mit dem Heck verbunden ist. Die Einleitung der Trimmbewegung geschieht dabei durch einen selbsthemmenden Stellantrieb, etwa durch eine Stellstrebe mit zwei Enden, beispielsweise durch einen Spindelantrieb, dessen eines Ende in einem von dem besagten Gelenk entfernten Bereich des Mittelkastens angreift und dessen anderes Ende in einem heckfesten Punkt schwenkbar gelagert ist. Um eine unbehinderte Trimmbewegung zu ermöglichen, sind hierbei trapezförmige Ausschnitte in den seitlichen Heckschalen erforderlich, die ihrerseits durch Spaltabdeckungen in Form elastischer oder starrer mit dem Mittelkasten schwenkbarer Abdeckschilde verschlossen sind.

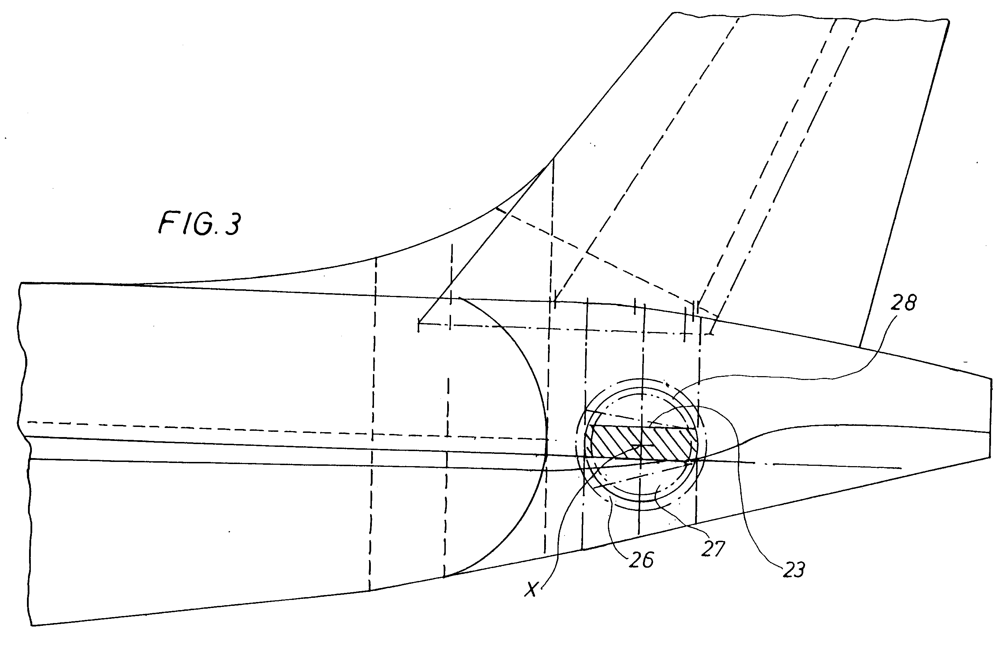

Figur 3 zeigt eine Ausgestaltung der Schwenkverbindung, die darin besteht, daß seitens des Hecks eine quer orientierte Rohraussteifung 26 angeordnet ist, die ein Schwenkelement 27 mit dem Mittelkasten 23 aufnimmt. Hierdurch können die innerhalb des erfindungsgemäßen Kurzhecks auf engem Raum wirkenden Kräfte besser beherrscht werden. Ein weiterer Vorteil dieser Ausgestaltung besteht darin, daß der betreffende Bewegungsspalt 28 auf einer Zylinderfläche um die Schwenkachse X liegt. Hierdurch kann das Problem der Spaltabdeckungen auf einfachere Weise gelöst werden, sofern die Funktionsfläche sorgfältig in den Strak integriert wird. Als Lager kommen Gleit- bder Wälzlager von entsprechendem Durchmesser in Betracht. Als Mittel zur Realisierung der Trimmbewegung sind vorzugsweise solche Antriebe denkbar, die eine drehende Bewegung liefern, beispielsweise Elektromotoren oder Hydraulikmotoren.

Bei der Gestaltung von Flugzeugkonfigurationen ist man allgemein bestrebt, deren Verhalten durch geeignete Formgebung günstig zu beeinflussen. Dies geschieht durch Stromlinienkonturierung. Dabei besteht eine wichtige Zielrichtung darin, den Interferenzwiderstand aerodynamischer Anordnungen, beispielsweise einer Rumpf/Flügel-Anordnung, zu reduzieren. Als Interferenzwiderstand wird die Differenz des gemessenen Gesamtwiderstandes und der rechnerischen Summe der Einzelwiderstände, in diesem Falle von Rumpf und Flügel, bezeichnet. Im Falle eines Hecks mit direkt angeschlossenem Höhen- und Seitenleitwerk ist die Reduzierung des Interferenzwiderstandes besonders wichtig.

Damit die durch die Verlagerung des Seitenleitwerks erreichte Verkürzung des Hecks keine nachteiligen Auswirkungen auf das aerodynamische Verhalten des Hecks hat, weist dieses eine durch Stromlinienkonturierung neu gestaltete äußere Geometrie auf.

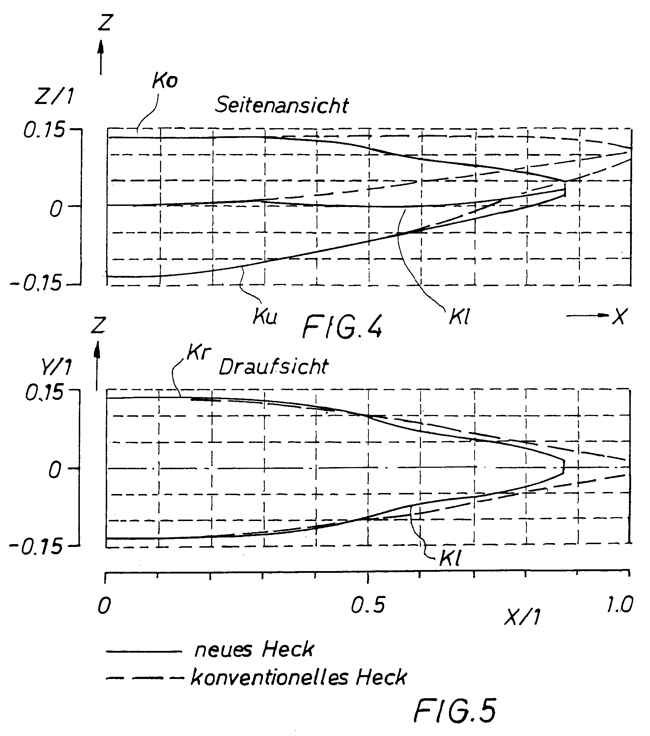

Die Figuren 4 und 5 zeigen diese neue Geometrie. Diese wird anhand einer normierten Darstellung mit einem bisherigen Heck verglichen. Dabei ist der Wert $x/l=1$ der Länge des bisherigen Hecks zugeordnet. Die Querschnitte des neuen Hecks, mit Vollinien dargestellt, zeigen von links nach rechts bis etwa zum Wert $x/l=0,4$ zunächst eine geringere Abnahme als das gestrichelt dargestellte bisherige Heck. Im Bereich etwa von $x/l=0,4$ bis 0,6 erfolgt die Abnahme der Querschnittsflächen dann rascher als bei dem bisherigen Heck, um anschließend etwa ab $x/l=0,6$ bis zum Ende des Hecks wieder langsamer abzunehmen. Aufgrund der neuen Querschnittsverteilung im Heckbereich ergibt sich, daß mindestens die obere Konturlinie $k_o$ und die beiden seitlichen Konturlinien $k_l, k_r$ jeweils einen Wendepunkt aufweisen. Ein weiteres Merkmal der neuen Heckform besteht darin, daS die Projektion der seitlichen Konturlinien $k_l$ und $k_r$ etwa ab dem Wert $x/l=0,3$ nach unten konvex gekrümmt ist. Aufgrund dieser Merkmale kann das neue Heck ca. 12% kürzer als das bisherige sein, ohne daß dies zu nachteiligen aerodynamischen Wirkungen führt. Die vorteilhafte Verkürzung des Hecks wird dadurch deutlich, daß das Ende des neuen Hecks etwa an der Stelle $x/l=0,88$ liegt. Die Heckform mit den besagten Wendepunkten ist das Ergebnis einer systematischen Stromlinienkonturierung. Der aufwärts gerichtete Verlauf der unteren Konturlinie resultiert z.T. immer aus der Forderung, daß am Heck während der beim Start stattfindenden Rotation zu jeder Zeit eine hinreichende Bodenfreiheit besteht. Die aus Fig. 4 erkennbare Verlagerung der Spitze des neuen Hecks nach unten erfolgt aus Gründen der Aerodynamik. Auf das Verhalten bei der Rotation hat diese Maßnahme keinen Einfluß, da die Heckspitze außerhalb des bei der Rotation kritischen Bereiches liegt.

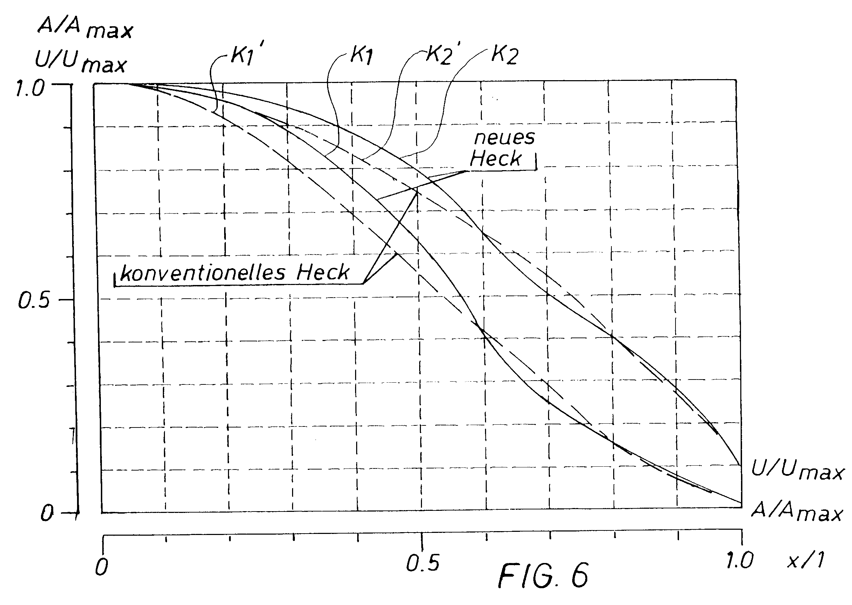

Figur 6 zeigt ein Diagramm, woraus der Verlauf des normierten Rumpfquerschnitts $A/A_{max}$ sowie des jeweiligen normierten Umfangs $U/U_{max}$ in Abhängigkeit von der normierten Hecklänge $x/l$ hervorgeht. Beide Funktionen sind durch Vollinien dargestellt, wobei der Querschnittsverlauf durch die Kurve $k_1$ und der Verlauf des Umfangs durch die Kurve $k_2$ aufgezeigt ist. Zur Gegenüberstellung des neuen Hecks mit einem bisherigen sind dessen entsprechende Funktionen $k_1$, bzw. $k_2$, gestrichelt dargestellt. Dabei sind die Hecklängen durch eine Normierung so umgerechnet, daß das Ende des bisherigen Hecks und das Ende des neuen Hecks an der Stelle $x/l=1$ liegt. Es fällt auf, daS sowohl $k_1$, als auch $k_2$, einen relativ geradlinigen Verlauf zeigen, wohingegen die Funktionen $A/A_{max}$ und $U/U_{max}$ jeweils etwa bei $x/l=0,6$ einen Wendepunkt aufweisen. Der Bereich, in dem beide Wendepunkte liegen können, liegt bei $0,5<x/l<0,7$.

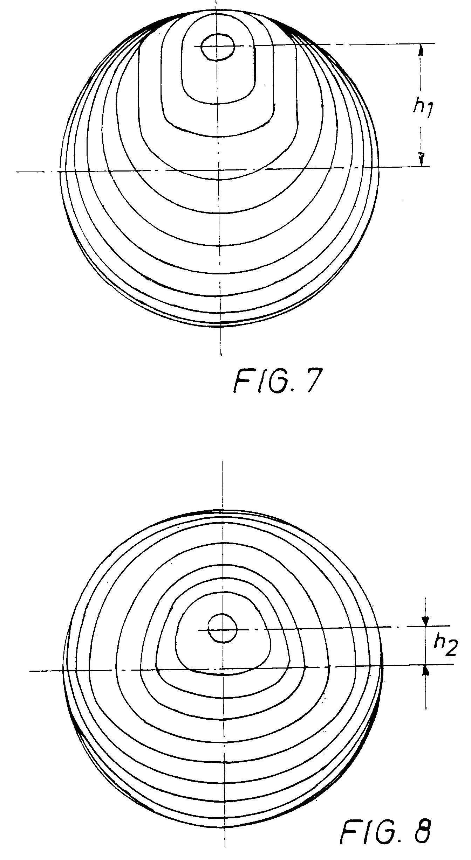

Figur 7 zeigt einen Spantenriß eines bisherigen Hecks. Dabei definiert das Achsenkreuz die Lage der Rumpfachse. Die einzelnen Spante sind im wesentlichen kreisförmig, wobei die Heckspitze um eine Höhe h1 relativ weit oberhalb der Rumpfachse liegt. Die seitlichen Abflachungen sollen den Anschluß einer trimmbaren Höhenflosse erleichtern.

Figur 8 zeigt schließlich einen Spantenriß eines neuen Hecks. Hierbei liegt die Heckspitze nur um die relativ kleine Höhe h2 oberhalb der Rumpfachse. Die Form der einzelnen Spante ist so ausgebildet, daß der erzeugende Seitenmeridian jeweils nahe bzw. unterhalb der Rumpfachse verläuft, wobei die Spantquerschnitte auf der Unterseite des Hecks eine abgeflachte, annähernd geradlinige Form aufweisen. Im übrigen sind die Spantformen im Heckbereich nicht auf eine bestimmte Geometrie beschränkt, sondern können aufgrund von Zweckmäßigkeitserwägungen festgelegt werden, wobei jedoch wichtig ist, daß die vorbeschriebene Querschnitts- und Umfangsverteilung verwirklicht wird.

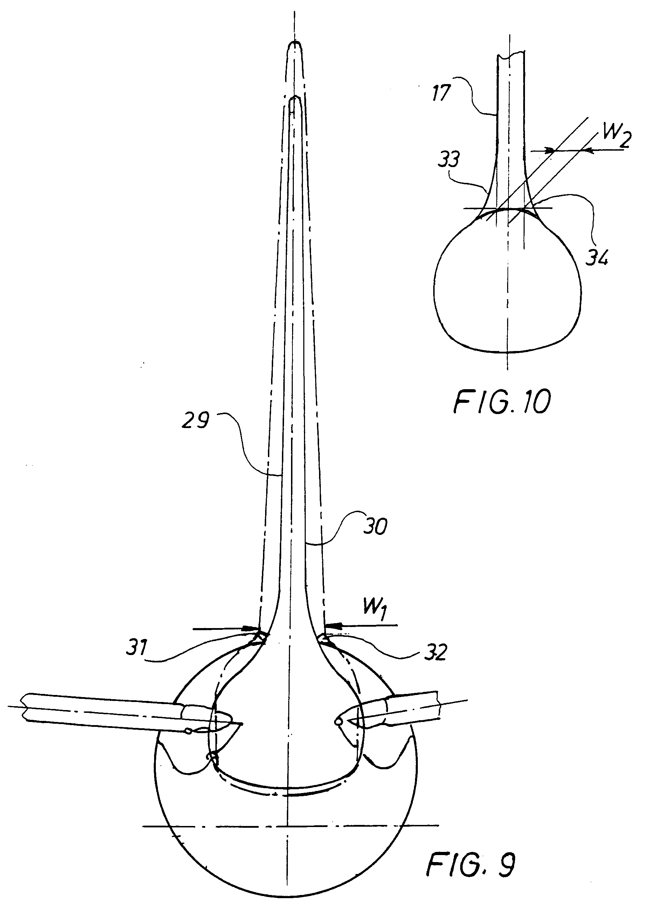

Fig. 9 zeigt einen Vergleich eines bisherigen mit einem neuen Rumpf- Seitenleitwerks-Übergang anhand eines Schnittes durch den betreffenden Heckbereich. Dabei ist die bisherige Querschnittsform durch eine Strich-punktierte Linie 29 und die neue Form durch eine Vollinie 30 dargestellt. Damit der durch die erfindungsgemäß gezielt herbeigeführte Verkopplung der Seitenleitwerks- mit der Höhenleitwerks-Struktur in Verbindung mit der reduzierten Pfeilung des Seitenleitwerks verursachte Interferenzwiderstand niedrig gehalten wird, weist das Seitenleitwerk ein relativ dünnes Profil auf. Das bisherige Seitenleitwerk weist an seiner Wurzel eine Dicke von $w_1$ auf. Im Bereich des Übergangs zwischen dem Heck und dem Seitenleitwerk verläuft jeweils eine Hohlkehle, mit einer Beschlagsverkleidung 31,32. Fig. 10 zeigt Einzelheiten des neuen Seitenleitwerks. Die Dicke $w_2$ an der Wurzel des neuen Seitenleitwerks ist gegenüber der bisherigen auf etwa 1/3 reduziert. Der Übergang vom Heck zum Seitenleitwerk 17 ist entsprechend den aerodynamischen Erfordernissen beidseitig so durch je eine gekrümmte Fläche gebildet, daß anstelle scharfkantiger Übergänge jeweils ein stetig gekrümmter Übergangsbereich 33,34 entsteht. Um im Wurzelbereich des Seitenleitwerks 17 trotz des dünnen Profils eine ausreichende Festigkeit sicherzustellen, besteht eine Ausgestaltung der Erfindung darin, daß die Übergangsbereiche 33,34 des Seitenleitwerks zum Rumpf als tragende Struktur ausgebildet ist.

**Patentansprüche**

1. Rumpfheck für ein Verkehrsflugzeug mit einer Druckkabine, wobei das Rumpfheck eine obere Konturlinie $k_o$ und eine untere Konturlinie aufweist, wodurch der Umriß des Hecks bei seitlicher horizontaler Betrachtung definiert wird, und zwei seitliche Konturlinien $(k_l,k_r)$ aufweist, wodurch der Umriß des Hecks bei vertikaler Betrachtung definiert wird, wobei das Rumpfheck ferner zwei Spante (20,22) aufweist, die ein Seitenleitwerk tragen, und ein Höhenleitwerk mit einer Flosse an das Rumpfheck angeschlossen ist und die Flosse über deren Mittelkasten (23) trimmbar ausgebildet ist, dadurch **gekennzeichnet,** daß mindestens die obere Konturlinie $(k_o)$ und die beiden seitlichen Konturlinien $(k_l,k_r)$ jeweils einen Wendepunkt aufweisen und der Mittelkasten (23) des Höhenleitwerks das Rumpfheck (1,16) zwischen den Spanten (20,22) durchdringt, die das Seitenleitwerk tragen.

2. Rumpfheck nach Anspruch 1, dadurch **gekennzeichnet,** daß seitens des Hecks (1,16) eine quer orientierte Rohraussteifung (26) angeordnet ist, die ein Schwenkelement (27) mit dem Mittelkasten (23) aufnimmt.

3. Rumpfheck nach Anspruch 2, dadurch **gekennzeichnet,** daß das Schwenkelement (27) mittels Gleitlagern innerhalb der Rohraussteifung (26) gelagert ist.

4. Rumpfheck nach Anspruch 2 oder 3, dadurch **gekennzeichnet,** daß das Schwenkelement (27) mittels Wälzlagern innerhalb der Rohraussteifung (26) gelagert ist.

5. Rumpfheck nach einem der Ansprüche 1 bis 4, dadurch **gekennzeichnet,** daß der Verlauf der normierten Querschnittsfläche $A/A_{max}$ im Bereich der normierten Hecklänge $0,5<x/l<0,7$ einen Wendepunkt aufweist.

6. Rumpfheck nach einem der Ansprüche 1 bis 5, dadurch **gekennzeichnet,** daß der Verlauf des normierten Heckumfangs $U/U_{max}$ im Bereich der normierten Hecklänge $0,5<x/l<0,7$ einen Wendepunkt aufweist.

7. Rumpfheck nach einem der Ansprüche 1 bis 6, dadurch **gekennzeichnet,** daß der Übergangsbereich des Seitenleitwerks zum Rumpf als tragende Struktur ausgebildet ist.

8. Rumpfheck nach einem der Ansprüche 1 bis 7, dadurch **gekennzeichnet,** daß die Spantquerschnitte auf der Unterseite des Hecks eine abgeflachte, annähernd geradlinige Form aufweisen.

**Claims**

1. Aft fuselage section for a commercial aircraft with a pressurized cabin, in which the aft fuselage section has an upper contour line $k_o$ and a lower contour line, whereby the outline of the tail is defined with lateral horizontal viewing, and has two lateral contour lines $(k_1, k_r)$, whereby the outline of the tail is defined with vertical viewing, in which the aft fuselage section further comprises two frames (20, 22), which bear a rudder assembly, and an elevator assembly is connected to the aft fuselage section by a fin and the fin is constructed so as to be trimmable by means of its centre box (23),

characterised in that at least the upper contour line ($k_o$) and the two lateral contour lines ($k_1$, $k_r$) each have a point of inflection and the centre box (23) of the elevator assembly passes through the aft fuselage section (1, 16) between the frames (20, 22) which bear the rudder assembly.

2. Aft fuselage section according to claim 1, characterised in that at the side of the tail (1, 16) an obliquely oriented tubular stiffening (26) is disposed, which incorporates a swivel element (27) with the centre box (23).

3. Aft fuselage section according to claim 2, characterised in that the swivel element (27) is supported within the pipe stiffening (26) by means of friction bearings.

4. Aft fuselage section according to claim 2 or 3, characterised in that the swivel element (27) is supported within the pipe stiffening (26) by means of roller bearings.

5. Aft fuselage section according to one of claims 1 to 4, characterised in that the shape of the normalized cross-sectional area $A/A_{max}$ has a point of inflection in the area of the normalized tail length $0.5 < x/1 < 0.7$.

6. Aft fuselage section according to one of claims 1 to 5, characterised in that the shape of the normalized tail periphery $U/U_{max}$ has a point of inflection in the area of the normalized tail length $0.5 < x/1 < 0.7$.

7. Aft fuselage section according to one of claims 1 to 6, characterised in that the transitional area from the rudder assembly to the fuselage is formed as a load-bearing structure.

8. Aft fuselage section according to one of claims 1 to 7, characterised in that the frame cross-sections have a flattened, approximately straight-lined form on the underside of the tail.

## Revendications

1. Arrière de fuselage pour un avion de ligne pourvu d'une cabine étanche, l'arrière de fuselage présentant un profil supérieur $k_o$ et un profil inférieur par l'intermédiaire desquels est défini le contour de l'arrière lorsqu'on le regarde latéralement et horizontalement, et deux profils latéraux ($k_l$, $k_r$) qui définissent le contour de l'arrière lorsqu'on le regarde verticalement, l'arrière du fuselage présentant en outre deux couples (20, 22) qui portent une gouverne de direction, et une gouverne de profondeur pourvue d'un plan fixe étant connecté à l'arrière du fuselage et le plan fixe étant conçu de manière à pouvoir être arrimé par l'intermédiaire du châssis intermédiaire (23) de celui-ci,

caractérisé en ce que, au moins le profil supérieur ($k_o$) et les deux profils latéraux ($k_l$, $k_r$) présentent un point d'inflexion et en ce que le châssis intermédiaire (23) de la gouverne de profondeur pénètre l'arrière de fuselage (1, 16) entre les couples (20, 22), qui portent la gouverne de direction.

2. Arrière de fuselage suivant la revendication 1, caractérisé en ce que, dans la partie arrière (1, 16) est disposé un raidisseur tubulaire (26) transversal, qui accueille un élément de pivotement (27) pourvu du châssis intermédiaire (23).

3. Arrière de fuselage suivant la revendication 2, caractérisé en ce que, l'élément de pivotement (27) est disposé au moyen de paliers lisses à l'intérieur du raidisseur tubulaire (26).

4. Arrière de fuselage suivant la revendication 2 ou 3, caractérisé en ce que, l'élément de pivotement (27) est disposé au moyen de paliers à roulement à l'intérieur du raidisseur tubulaire (26).

5. Arrière de fuselage suivant l'une ou l'autre des revendications 1 à 4, caractérisé en ce que, le parcours de la surface de la section transversale normalisée $A/A_{max}$ présente un point d'inflexion dans la zone de la longueur de l'arrière normalisée $0,5 < x /l < 0,7$.

6. Arrière de fuselage suivant l'une ou l'autre des revendications 1 à 5, caractérisé en ce que, le parcours de la circonférence de l'arrière normalisée $U/U_{max}$ présente un point d'inflexion dans la zone de la longueur de l'arrière normalisée $0,5 < x /l < 0,7$.

7. Arrière de fuselage suivant l'une ou l'autre des revendications 1 à 6, caractérisé en ce que, la zone de transition entre la gouverne de direction et le fuselage est conçue comme une structure portante.

8. Arrière de fuselage suivant l'une ou l'autre des revendications 1 à 7, caractérisé en ce que, les sections transversales des couples sur le dessous de l'arrière présentent une forme aplatie, plus ou moins droite.

FIG. 1

FIG. 2

FIG.3

28

26 27 23

X

FIG.4

FIG.5

——— neues Heck
— — — konventionelles Heck

FIG. 6

EP 0 737 616 B1

FIG. 7

FIG. 8

FIG.10

FIG. 9